# EUROPEAN PATENT APPLICATION

(11) **EP 4 835 827 A1**
(43) Date of publication of application: **04.11.2026**
(21) Application number: 25827216.0
(22) Date of filing: 24.03.2025
(51) Int. Cl.: G06T 11/60, G06T 7/11, G06F 21/32, G06F 3/04895, G06F 3/14

(54) **ELECTRONIC DEVICE AND METHOD FOR EDITING FACE INCLUDED IN IMAGE BY USING ARTIFICIAL INTELLIGENCE MODEL IN ELECTRONIC DEVICE**

(30) Priority: 27.06.2024 KR 20240084147; 10.07.2024 KR 20240090936
(71) Applicant: Samsung Electronics Co., Ltd., Suwon-si, Gyeonggi-do 16677 (KR)
(72) Inventor: KIM, Gangseo, Suwon-si Gyeonggi-do 16677 (KR); NA, Jaekeun, Suwon-si Gyeonggi-do 16677 (KR); PARK, Sunmin, Suwon-si Gyeonggi-do 16677 (KR); AHN, Heebum, Suwon-si Gyeonggi-do 16677 (KR); KIM, Hyunsoo, Suwon-si Gyeonggi-do 16677 (KR)
(74) Representative: HGF
(86) International application number: PCT/KR2025/003707
(87) International publication number: WO 2026/005192

(57) **Abstract**

An electronic device according to an embodiment may comprise a communication circuit, a display, at least one processor, and a memory for storing instructions, wherein the instructions, when executed individually or collectively by the at least one processor, cause the electronic device to: when editing of a face included in a first image is identified, transmit editing information including first information about the face included in the first image to an artificial intelligence model, the first information being obtained by learning a feature of the face selected by the editing; when a second image obtained by editing the face included in the first image by using the editing information is received from the artificial intelligence model, obtain a score related to similarity between an edited face included in the second image and the face included in the first image; and when the obtained score is greater than or equal to a threshold value, store the second image. In addition, other embodiments may be included.

## Description

### [Technical Field]

The disclosure relates to an electronic device and a method of editing a face included in an image using an artificial intelligence (AI) model in an electronic device.

### [Background Art]

Recently, technology that generates images using an artificial intelligence (AI) model has been actively advancing, including technology that generates a new image by editing a specific area of an image.

In the case of editing a face included in an image using an AI model, the face may be edited as a totally different face. However, since other persons' faces may be edited without consent, it is discouraged and often times prohibited to edit a face included in an image using an AI model.

### [Detailed Description of the Invention]

### [Technical Solution]

An authenticated face is only edited by using an artificial intelligence (AI) model, and an image including the edited face may be provided only when the edited face is similar to the authenticated face.

According to an embodiment, an electronic device includes: a communication circuit; a display; at least one processor including a processing circuit; and memory storing instructions, wherein the instructions, when executed by the at least one processor individually or collectively, cause the electronic device to: based on editing of a face included in a first image being identified, transfer, to an artificial intelligence (AI) model, editing information including first information associated with the face included in the first image, the first information obtained by training a characteristic of the face selected for editing, based on receiving from the AI model a second image in which the face included in the first image is edited using the editing information, obtain a score related to a similarity between an edited face included in the second image and the face included in the first image, and based on the obtained score being greater than or equal to a threshold value, store the second image.

According to an embodiment, a method of editing using an artificial intelligence (AI) model in an electronic device, includes: based on editing of a face included in a first image is being identified, transferring, to an AI model, editing information including first information associated with the face included in the first image, the first information obtained by training a characteristic of the face selected for editing; based on a second image in which the face included in the first image is edited by using the editing information being received from the AI model, obtaining a score related to a similarity between with the edited face included in the second image and the face included in the first image; and based on the obtained score being greater than or equal to a threshold value, storing the second image.

According to embodiment, a non-transitory storage medium, stores instructions which, when executed by a processor in an electronic device, cause the electronic device to perform a method including: based on editing of a face included in a first image is being identified, transferring, to an AI model, editing information including first information associated with the face included in the first image, the first information obtained by training a characteristic of the face selected for editing; based on a second image in which the face included in the first image is edited by using the editing information being received from the AI model, obtaining a score related to a similarity between with the edited face included in the second image and the face included in the first image; and based on the obtained score being greater than or equal to a threshold value, storing the second image.

### [Brief Description of Drawings]

The above and other aspects, features, and advantages of certain embodiments of the present disclosure will be more apparent from the following description taken in conjunction with the accompanying drawings, in which:
FIG. 1 is a block diagram illustrating an electronic device in a network environment according to an embodiments;
FIG. 2A is a block diagram of an electronic device according to an embodiment;
FIG. 2B is a block diagram illustrating a configuration of a processor and an artificial intelligence (AI) model according to an embodiment;
FIGS. 3A, 3B, 3C, 3D, and 3E are diagrams illustrating an operation of generating first information in an AI model;
FIGS. 4A and 4B are diagrams illustrating an operation of generating an image in which a face is edited in an AI model;
FIG. 5 is a diagram illustrating an operation of identifying a similarity associated with an image in which a face is edited in an electronic device according to an embodiment;
FIGS. 6A, 6B, 6C, and 6D are diagrams illustrating an operation of editing a face included in an image by using an AI model in an electronic device according to an embodiment;
FIGS. 7A, 7B, and 7C are diagrams illustrating an operation of editing a face included in an image by using an AI model in an electronic device according to an embodiment;
FIG. 8A is a diagram illustrating an operation of editing a face included in an image by using an AI model in an electronic device according to an embodiment;
FIG. 8B is a diagram illustrating an operation of editing a face included in an image by using an AI model in an electronic device according to an embodiment;
FIG. 9 is a flowchart illustrating an operation of editing a face included in an image by using an AI model in an electronic device according to an embodiment; and
FIG. 10 is a flowchart illustrating an operation of editing a face included in an image by using an AI model in an electronic device according to an embodiment.

### [Mode for Carrying out the Invention]

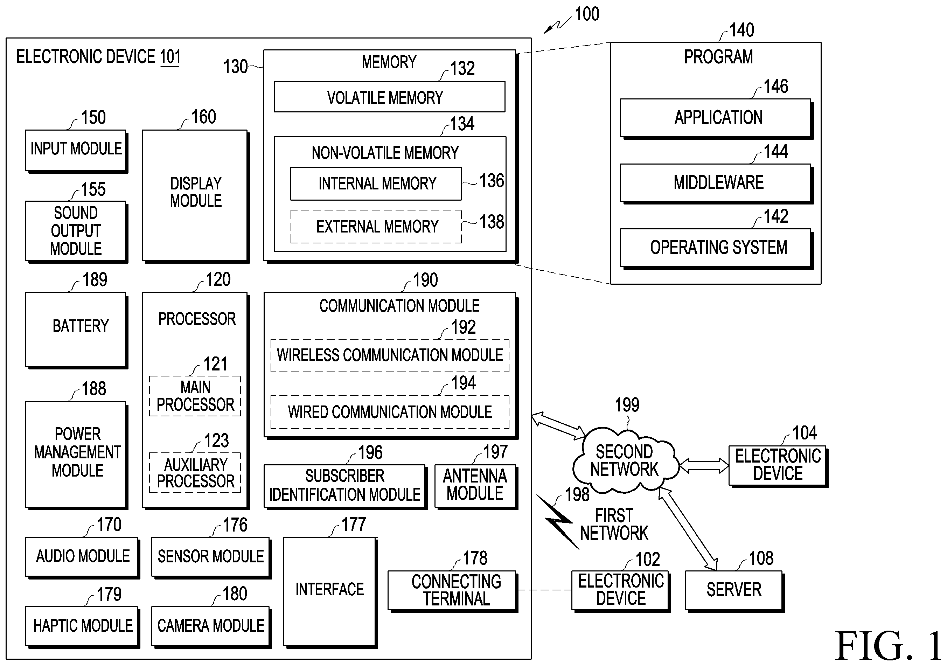

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine training. Such training may be performed, e.g., by the electronic device 101 where the artificial intelligence is performed or via a separate server (e.g., the server 108). Training algorithms may include, but are not limited to, e.g., supervised training, unsupervised training, semi-supervised training, or reinforcement training. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine training and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

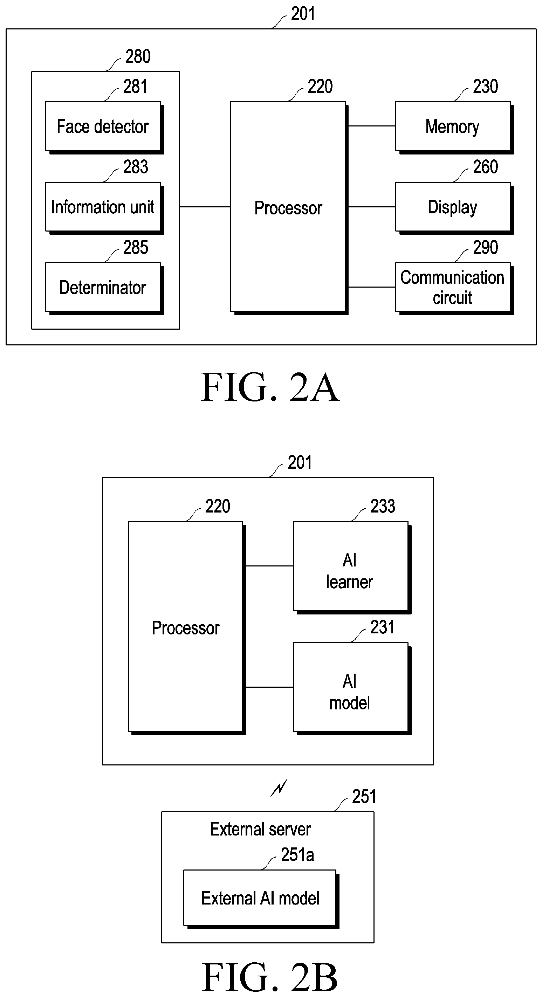

FIG. 2A is a block diagram of an electronic device according to an embodiment, and FIG. 2B is a block diagram illustrating a configuration of a processor and an artificial intelligence (AI) model according to an embodiment.

Referring to FIG. 2A and FIG. 2B, an electronic device 201 may include a processor 220, memory 230, a display 260, and a communication circuit 290. The electronic device 201 may correspond to the electronic device 101 (FIG. 1).

According to an embodiment, the processor 220 may control the overall operation of the electronic device 201. The processor 220 according to an embodiment may control at least one other component (e.g., a hardware or software component) of the electronic device 201 connected to the processor 220 by executing software (e.g., the program 140 of FIG. 1), and may perform data processing and operations based on an instruction. An instruction according to an embodiment may include a machine language-based command processible by the electronic device 201 or the processor 220. For example, an instruction may include a command corresponding to an operation indication used in a program.

According to an embodiment, upon identifying editing of a face included in a first image, the processor 220 may generate editing information to be transmitted to an AI model. In one or more examples, editing of a face may be identified or determined based on a state of the electronic device 201. For example, when the electronic device 201 is executing an editing application that displays an image including a face, it may be determined that the face in the image is being edited. In one or more examples, it may be determined the face in the image is being edited when or more editing tasks are being performed on the face.

According to an embodiment, upon identifying that the first image is selected based on an input of a user of the electronic device, the processor 220 may identify whether the first image includes a face.

According to an embodiment, the processor 220 may identify whether a face is included in the first image by using a face filter.

According to an embodiment, the processor 220 may identify editing of a face included in the first image based on an input of the user.

According to an embodiment, the processor 220 may identify an editing area of the first image based on an input of the user, and may identify whether the editing area is the whole or part of the face included in the first image.

According to an embodiment, upon identifying editing of the face included in the first image, the processor 220 may identify whether the face selected for editing is an authenticated face that is allowed to edit using the AI model.

According to an embodiment, when information associated with the face selected for editing is included in authenticated face information that allows editing using the AI model stored in the memory 230, the processor 220 may identify that the face selected for editing is an authenticated face that is allowed to edit using the AI model, and may obtain first information associated with the face selected for editing.

According to an embodiment, the processor 220 may obtain first information associated with the face selected for editing among first information obtained by training facial characteristics and stored in the memory 230.

According to an embodiment, when the face selected for editing is not identified as an authenticated face that is allowed to edit using the AI model, the processor 220 may display, on the display 260, a message indicating that face editing for the first image is not possible.

According to an embodiment, the processor 220 may identify at least one of a face of a user of the electronic device, a face of a contact selected by the user of the electronic device from among contacts stored in a contact list, a face of a contact satisfying a condition designated by the user among the contacts stored in the contact list, or a face including face tag information among images including faces, as an authenticated face allowed for editing using the AI model.

According to an embodiment, the processor 220 may identify an authenticated face that is allowed to edit using the AI model in advance based on various conditions such as a user's selection, a user's designated condition, or conditions designated in the electronic device, and may store the same in the memory 230.

According to an embodiment, the processor 220 obtain first information obtained by training facial characteristics by using an artificial intelligence (AI) trainer 233, and may store the same in the memory 230. In one or more examples, the AI trainer 233 may be an ASIC or processor configured to perform an AI training process. In one or more examples, the AI trainer 233 may be a set of one or more executable code, which when executed by the processor 220, cause the processor 220 to execute the AI training process.

According to an embodiment, the processor 220 obtain the first information corresponding to an authenticated face that is allowed to edit using the AI model by using the AI trainer 233, and may store the same in the memory 230.

According to an embodiment, the processor 220 may train (e.g., may be learned based on) a plurality of images including an identical face by using the AI trainer 233 so as to generate first information including characteristics of the identical face, and may store the first information in the memory 230 as first information associated with the identical face included in the plurality of trained images.

According to an embodiment , the processor 220 may sectionalize a face into a plurality of areas (e.g., an eye area, a nose area, a mouth area, and an entire face area) by using the AI trainer 233, may identify weight values corresponding to the plurality of areas, and may generate first information by applying the identified weight values.

AI trainer 233 according to an embodiment may include an encoder stored in the memory 230.

The AI trainer according to an embodiment may include a trained encoder transferred from the AI model 231.

According to an embodiment, the processor 220 may transmit, to the AI model 231, editing information including at least one of the first image, information associated with the editing area of the face included in the first image, or a prompt describing editing, and the first information associated with the face selected for editing.

According to an embodiment, the processor 220 generate a second image in which the face included in the first image is edited based on the editing information by using the AI model 231.

According to an embodiment, the AI model 231 include an on-device AI model stored in the memory 230, and the AI model 231 may include a generative AI model.

According to an embodiment, the processor 220 similar to the AI model 231, may edit an image including a face by using an external AI model 251a stored in an external server 251, and the external AI model 251a may include a generative AI model.

According to an embodiment, the processor 220 may edit an image including a face by using at least one of the AI model 231 stored in the memory 230 and the external AI model 251a included in the external server 251. In one or more examples, the electronic device 201 may be pre-loaded with the AI model 231 by downloading the AI model 251a. In one or more examples, when the external AI model 251a is updated, the updated external AI model 251a may be downloaded to the electronic device 201 to replace the AI model 231. In one or more examples, one or more tasks may be distributed between the AI model 231 and the external AI model 251a. According to an embodiment, the AI model 231 may use, as an input value, at least one of the first image, information associated with the editing area of the face included in the first image, or a prompt describing editing, and first information associated with the face selected for editing, which are included in the editing information, and may generate, as an output value, the second image in which the face included in the first image is edited.

According to an embodiment, the AI model 231 may identify a weight value for the editing area based on the information associated with the editing area of the face included in the first image, and may generate the second image in which the face included in the first image is edited by applying the identified weight value.

According to an embodiment, upon receiving, from the AI model 231, the second image in which the face included in the first image is edited, the processor 220 may identify a similarity between an edited face included in the second image and an authenticated face, and may provide (e.g., display, store) the second image.

According to an embodiment, the processor 220 may perform a process of sectionalizing \the face included in the second image into a plurality of areas (e.g., an eye area, a nose area, a mouth area, and an entire face area), may obtain a score for the plurality of areas, may identify that the edited face included in the second image is a face identical to an authenticated face when the score for the plurality of areas is greater than or equal to a threshold value, and may display the second image including the edited face on the display 260. According to an embodiment, the authenticated face and the edited face may be authenticated as the face of an identical person based on the characteristics of the authenticated face and the edited face (e.g., a plurality of sectionalized facial areas (e.g., an eye area, a nose area, a mouth area, or an entire face area)). According to an embodiment, the processor 220 may identify that the edited face included in the second image is a face different from the authenticated face when the score for the plurality of areas is less than the threshold value, and may display, on the display 260, a message indicating that face editing for the first image is not possible.

According to an embodiment, the processor 220 sectionalize the face included in the second image into a plurality of areas (e.g., an eye area, a nose area, a mouth area, and an entire face area), may obtain a score for an area corresponding to an editing area among the plurality of areas, may identify that the edited face included in the second image is a face identical to the authenticated face when the score for the area corresponding to the editing area is greater than or equal to a threshold value, and may display the second image including the edited face on the display 260. According to an embodiment, the processor 220 may identify that the edited face included in the second image is a face different from the authenticated face when the score for the edited area is less than the threshold value, and may display, on the display 260, a message indicating that face editing for the first image is not possible.

According to an embodiment, the processor 220 may obtain a score for the plurality of areas by using an earth mover's distance (EMD) that is based on the minimum amount of work needed for moving a distribution therebetween and transforming one distribution to another distribution, perceptual loss, or a mean square error (MSE). In one or more examples, the EMD may be a measure of dissimilarity between two frequency distributions, densities, or measures over a space. In one or more examples, a perceptual loss may be determined by passing images through a neural network, and comparing feature maps at one or more layers.

According to an embodiment, the processor 220 may sectionalize an authenticated face into a plurality of areas, and may configure an average value of the scores for the plurality of areas as the threshold value.

According to an embodiment, the processor 220 may sectionalize an authenticated face into a plurality of areas, and may configure a threshold value for each of the plurality of areas.

According to an embodiment, the processor 220 may change the threshold value depending on the performance or purpose of use of the AI model 231. In one or more examples, the AI model 231 may be updated or re-trained based on one or more pictures stored in electronic device 201, where the threshold value may be updated during the retraining.

According to an embodiment, the processor 220 identify a similarity between the edited face included in the second image and the face included in the first image, and may display the second image on the display 260 when the similarity is greater than or equal to a threshold value. According to an embodiment, the processor 220 may display, on the display 260, a message indicating that face editing for the first image is not possible when the similarity is less than the threshold value.

According to an embodiment, the processor 220 may identify the similarity between the edited face included in the second image and the face included in the first image by using a mean squared error (MSE), a peak signal-to-noise ratio (PSNR), or a structural similarity index (SSIM).

According to an embodiment, an operation of editing a face included in an image by using an AI model may be performed by the processor 220, or the processor 220 may include a face editor 280 for editing a face included in an image by using an AI model or may control the face editor 280 separately configured in the electronic device.

According to an embodiment, the face editor 280 may include a face detector 281, an information unit 283, and a determinator 285 for editing a face included in an image using an AI model.

According to an embodiment, the face detector 281 may identify whether a face is included in an image, similar to the processor 220.

According to an embodiment, the information unit 283 may generate editing information, similar to the processor 220.

According to an embodiment, the determinator 285, similar to the processor 220, may identify whether a face included in a first image is an authenticated face, and may identify a similarity between the authenticated face and an edited face in a second image including the edited face received from the AI model.

According to an embodiment, when the electronic device is in a pet mode, the processor 220 may generate and provide a second image in which an animal included in a first image is edited using an AI model.

According to an embodiment, the processor 220 may generate and provide the second image in which the animal included in the first image is edited by using the AI model when the electronic device is in the pet mode, in the same manner as the method of generating a second image in which a face included in a first image is edited using an AI model.

According to an embodiment, the memory 230 may be embodied to be substantially the same as, or similar to, the memory 130 of FIG. 1.

According to an embodiment, the on-device AI model 231 may be stored in the memory 230.

According to an embodiment, the on-device AI model 231, which is an artificial model installed in the electronic device 201, may provide various functions without using a network.

According to an embodiment, a plurality of AI models may be stored in the memory 230.

According to an embodiment, the plurality of AI models are models respectively trained based on predetermined types of training algorithms, and may be AI models embodied to receive various types of data (e.g., contents) and operate and output (e.g., or obtain) result data. The plurality of AI models, according to an embodiment, may include a generative AI model. The generative AI model may generate and output new content (e.g., text, an image, and/or computer code) based on trained contents in response to an input prompt. For example, a plurality of AI models (e.g., a machine training model and a deep training model) may be generated in an electronic device 201 by being trained via a machine training algorithm or a deep training algorithm so as to output predetermined types of result data as output data using predetermined types of data as input data, and may be stored in the electronic device 201, or AI models trained in an external electronic device (e.g., an external server) may be transferred to and stored in the electronic device 201. For example, the electronic device 201 may output input data as output data of a model trained via predetermined types of artificial intelligence based on a machine training algorithm or a deep training algorithm. The machine training algorithm may include supervised algorithms such as linear regression and logistic regression, unsupervised algorithms such as a clustering, visualization and dimensionality reduction, and association rule training, and reinforcement algorithms. The deep training algorithm may include an artificial neural network (ANN), a deep neural network (DNN) and a convolution neural network (CNN). As understood by one of ordinary skill in the art, the disclosure is not limited to the above-mentioned examples, and may also include any suitable training algorithms known to one of ordinary skill in the art. The completely trained AI model may include a plurality of operations (e.g., convolution layer or pooling layer) to operate input data, and may be embodied to perform an operation with respect to input data based on the plurality of operations, and to output result data.

According to an embodiment, a plurality of applications connectable to a plurality of external AI models may be stored in the memory 230.

According to an embodiment, authenticated face information that allows editing using an AI model and first information obtained by training facial characteristics may be stored in the memory 230.

According to an embodiment, the display 260 may be embodied to be substantially the same as, or similar to, the display module 160 of FIG. 1.

According to an embodiment, the display 260 may display a first image including a face before being edited (e.g., unedited) and/or a second image including an edited face.

According to an embodiment, the communication circuit 290 may establish a communication connection with an external electronic device (e.g., another electronic device or a server) in various types of communication schemes, and may perform data transmission and/or reception. As described above, the communication scheme may include a communication scheme that establishes a direct communication connection such as Bluetooth and Wi-Fi direct, a communication scheme (e.g., Wi-Fi communication) using an access point (AP), and a communication scheme (e.g., 3G, 4G/LTE, 5G) based on cellular communication using a base station. The communication circuit 290 may be embodied in the same manner as the communication module 190 described with reference to FIG. 1, and thus, a redundant description thereof will be omitted.

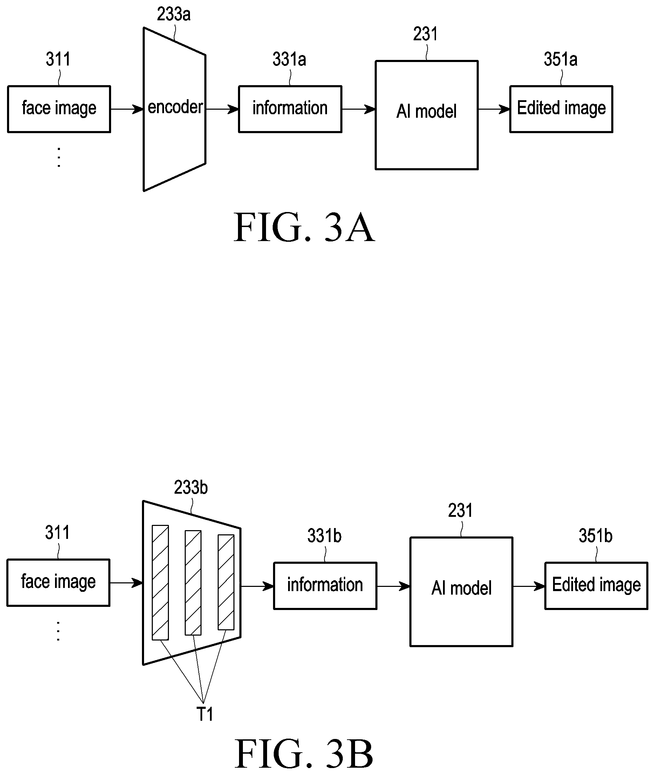

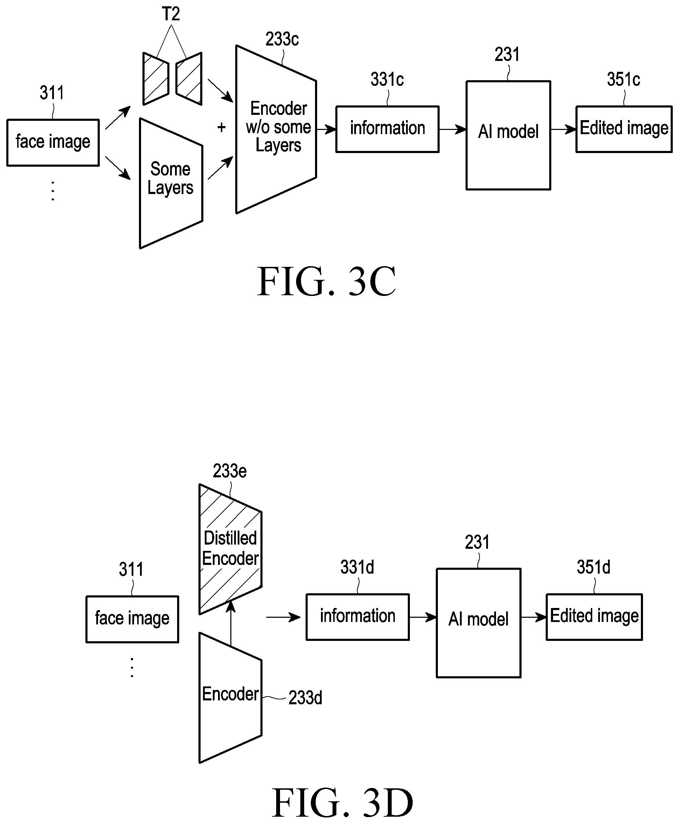

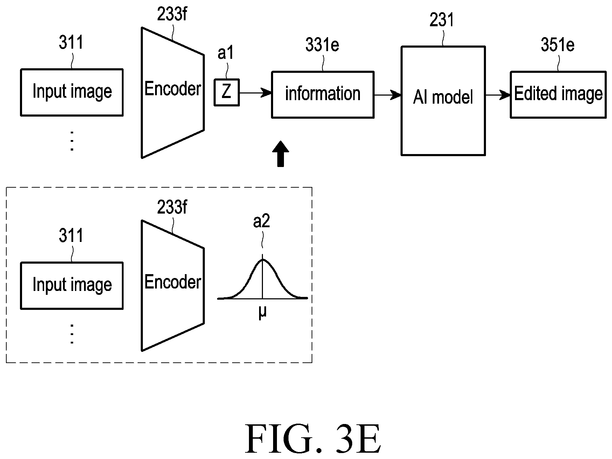

FIGS. 3A, 3B, 3C, 3D, and 3E are diagrams illustrating an operation of generating first information in an artificial intelligence (AI) model.

According to an embodiment, with reference to FIG. 3A, when a plurality of images 311 including a first face (e.g., an identical face) are input into an artificial intelligence (AI) trainer 233a (e.g., an encoder) as an input value, the AI trainer 233a (e.g., the encoder) may output first information 331a associated with the first face obtained by training characteristics of the first face. The AI trainer 233a (e.g., the encoder) may analyze the characteristics of the first face included in each of the plurality of images 311, may generate a distribution chart of the characteristics of the first face, and may generate the first information 331a by training the distribution chart of the characteristics of the first face.

When editing information including the first information 331a is input as an input value, the AI model 231 may output an edited image 351a generated based on the editing information as an output value.

The first information 331a may be a value obtained via the AI trainer 233a (e.g., the encoder), and may indicate a value (e.g., a latent vector value) representing the information and characteristics associated with the image in a latent space. The first information 331a may be a set of values (e.g., distribution values) capable of representing the characteristics and information associated the image.

According to an embodiment, a value of determining a condition for an appearance associated with an image (e.g., an eye color, a size, an illumination, an angle, or the like) of a person, object, or situation used for training performed in the AI trainer is a latent vector, and information associated with a face included in the image, such as the gender of the face, an age, a race, a hair style, a skin, and/or facial expression, or any other suitable facial expression known to one of ordinary skill in the art, and values associated with the background around a person, a face angle, a distance, wind, and/or light may be determined as latent vectors. The AI trainer may train and determine the data by itself.

According to an embodiment, with reference to FIG. 3B, when the plurality of images 311 including a first face (e.g., an identical face) are input into an artificial intelligence (AI) trainer 233b (e.g., an encoder) as an input value, the AI trainer 233b (e.g., the encoder) may train the same based on fine-tuning, may analyze characteristics of the first face included in each of the plurality of images 311, may generate a distribution chart of the characteristics of the first face, and may generate first information 331b by training the distribution chart of the characteristics of the first face.

When editing information including the first information 331b is input as an input value, the AI model 231 may output an edited image 351b generated based on the editing information, as an output value. According to an embodiment, in FIG. 3B, T1 may indicate an area where training and fine-tuning of the plurality of images 311, input as the input value, are performed in the AI trainer 233b (e.g., encoder).

According to an embodiment, with reference to FIG. 3C, when the plurality of images 311 including a first face (e.g., an identical face) are input into an artificial intelligence (AI) trainer 233c (e.g., an encoder) as an input value, the AI trainer 233c (e.g., the encoder) may train the same based on low rank adaptation (LoRA), may analyze the characteristics of the first face included in each of the plurality of images 311, may generate a distribution chart of the characteristics of the first face, and may generate first information 331c by training the distribution chart of the characteristics of the first face. In the case of training the plurality of images using the LoRA, when the amount of time spent in using the memory is less than the case of using fine-tuning, first information may also be generated efficiently. In one or more examples, the LoRA may be a model that may be used for fine tuning of data when the AI trainer is trained. As understood by one of ordinary skill in the art, the LoRA has been described as merely an example, and thus, the AI trainer may be trained by any suitable scheme known to one of ordinary skill in the art in addition to the LoRA.

When editing information including the first information 331c is input as an input value, the AI model 231 may output an edited image 351c generated based on the editing information as an output value. According to an embodiment, in FIG. 3C, T2 indicates an area where training and fine-tuning of the plurality of images 311 input as the input value are performed in the AI trainer 233c (e.g., the encoder).

According to an embodiment, with reference to FIG. 3D, when the plurality of images 311 including a first face (e.g., an identical face) are input into a first AI trainer 233d (e.g., an encoder) as an input value, the first AI trainer 233d (e.g., the encoder) may analyze the characteristics of the first face included in each of the plurality of images 311, may generate a distribution chart of the characteristics of the first face, and may transfer the distribution chart of the characteristics of the first face to a second AI trainer 233e (e.g., a distilled encoder). The second AI trainer 233e (e.g., the distilled encoder) may perform distillation of the distribution chart of the characteristics of the first face, which has a large size and is transferred from the first AI trainer 223d (encoder), so as to decrease the size, and may generate first information 331d by training the decreased-sized distribution chart of the characteristics of the first face. An electronic device may receive the first AI trainer 233d (e.g., the encoder), which has a large size, from the AI model, may perform distillation of the large-sized first AI trainer 233d (e.g., the encoder) so as to generate the second AI trainer 233e (e.g., distilled encoder), which has a small size and is usable by the electronic device, and may proceed with training the plurality of face images 311 via the second AI trainer 233e (e.g., the distilled encoder).

When editing information including the first information 331d is input as an input value, the AI model 231 may output an edited image 351d generated based on the editing information as an output value. According to an embodiment, in FIG. 3D, T3 may indicate an area where training and fine-tuning of the plurality of images 311 input as the input value are performed in the second AI trainer 233e (e.g., the distilled encoder).

According to an embodiment, with reference to FIG. 3E, when the plurality of images 311 including a first face (e.g., an identical face) are input into a first AI trainer 233f (e.g., an encoder) as an input value, the AI trainer 233f (e.g., the encoder) may generate first information 331e by combining a latent vector a1 and a distribution a2 generated by using a reparametrization trick with respect to the latent vector.

When editing information including the first information 331e is input as an input value, the AI model 231 may output an edited image 351e generated based on the editing information, as an output value.

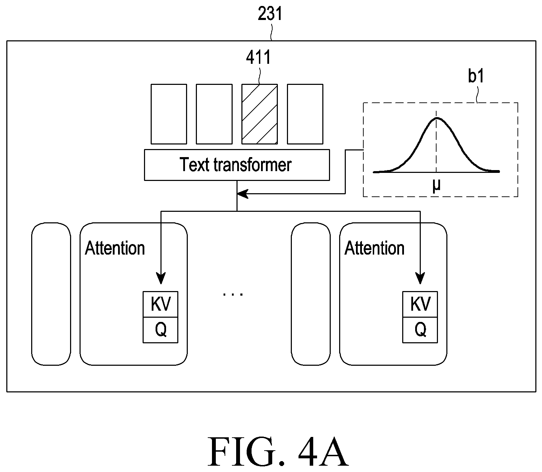

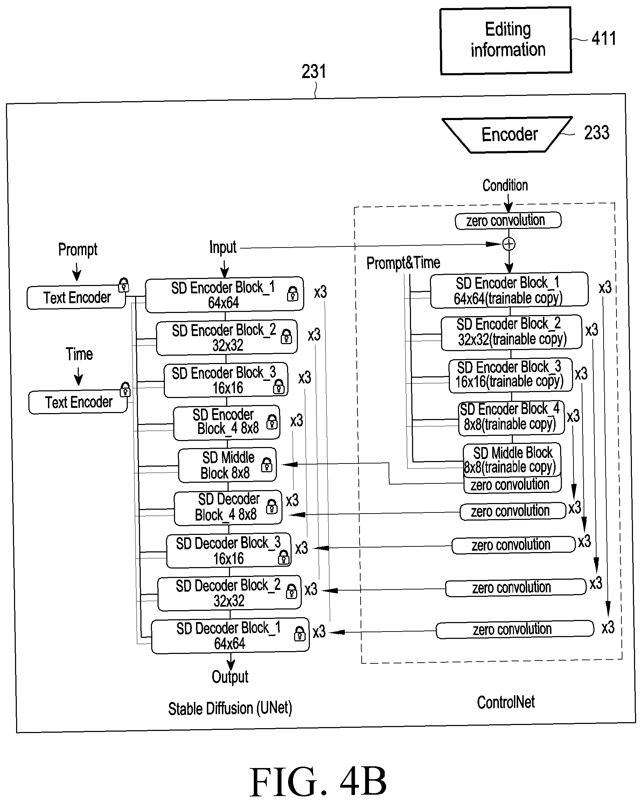

FIGS. 4A and 4B are diagrams illustrating an operation of generating an image in which a face is edited in an AI model.

According to an embodiment, with reference to FIG. 4A, the artificial intelligence (AI) model 231 (e.g., the AI model 231 of FIG. 2B) may receive editing information including at least one of a first image, information associated with an editing area of a face included in the first image, and a prompt describing editing, and first information which is associated with the face and is obtained by training characteristics of the face included in the first image, from a processor (e.g., the processor 220 of FIG. 2) of the electronic device. Upon identifying that the first information includes information (e.g., variance and average) associated with a distribution of facial characteristics, and the word, face, the AI model 231 may detect information b1 associated with a face from the information associated with the distribution, and may input the detected information b1 associated with the face to each step of the AI model 231 so as to generate a second image in which the face included in the first image is edited.

According to an embodiment, when an operation is performed based on the generative AI model 231 (e.g., a diffusion model), each attention (e.g., call command) step may remove noise of an image via a plurality of steps. When the word "person" is included in information 411 input in each step, noise may be removed from each step by using information input as an input value.

According to an embodiment, with reference to FIG. 4B, the artificial intelligence (AI) model 231 may receive editing information including at least one of a first image, information associated with an editing area of a face included in the first image, and a prompt describing editing, and first information which is associated with the face and is obtained by training characteristics of the face included in the first image, from a processor (e.g., the processor 220 of FIGS. 2A and 2B) of the electronic device. The AI model 231 may use the editing information as a condition for ControlNet, and may generate a second image in which the face included in the first image is edited, by using ControlNet. According to an embodiment, the generative AI model 231 (e.g., the diffusion model) may train whether an image generated via ControlNet used in the AI model 231 is represented to correspond to an input value input into the AI trainer 233 (e.g., the encoder), may transfer the trained AI trainer 233 (e.g., the encoder) to the electronic device, and the electronic device may generate first information associated with the face by training the characteristics of the face using the AI trainer 233 (e.g., the encoder).

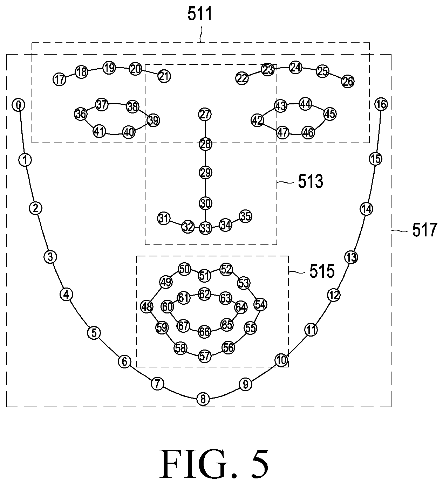

FIG. 5 is a diagram illustrating an operation of identifying a similarity associated with an image in which a face is edited in an electronic device according to an embodiment.

According to an embodiment, with reference to FIG. 5, when a second image in which a face included in a first image is edited is generated using an artificial intelligence (AI) model, an electronic device (e.g., the electronic device 101 of FIG. 1 and/or the electronic device 201 of FIG. 2) may sectionalize the edited face included in the second image into a plurality of areas, for example, an eye area 511, a nose area 513, a mouth area 515, and an entire face area 517.

The electronic device may obtain a score for the plurality of areas obtained by sectionalizing the edited face included in the second image or a score for an area corresponding to an editing area among the plurality of areas, may identify that the edited face is a face identical to a face before being edited (e.g., unedited) or identical to an authenticated face when the score is greater than or equal to a threshold value, and may display the second image on a display of the electronic device (e.g., the display 260 of FIG. 2A). The electronic device may identify that the edited face is a face different from the face before being edited (e.g., unedited) or the authenticated face when the score is less than the threshold value, and may display a message indicating that face editing for the first image is not possible on the display of the electronic device (e.g., the display 260 of FIG. 2A). In one or more examples, each area of the plurality of areas may receive an individual score that is averaged and used to compare to the threshold. In one or more examples, an area from the plurality of areas with the highest score may be used to compare to the threshold.

According to an embodiment, the electronic device may identify whether the face included in the first image is an authenticated face, before requesting the AI model to edit the face included in the first image, and may restrict editing of the first image when the face included in the first image is not identified as an authenticated face.

According to an embodiment, the electronic device may sectionalize the face included in the first image into a plurality of areas (e.g., an eye area, a nose area, a mouth area, and an entire face area), may obtain a score for the plurality of areas, may compare the obtained score and a threshold value, and may identify whether the face included in the first image is an authenticated face.

For example, the electronic device may obtain a score for the plurality of areas (sections) by using one of an EMD that is based on the minimum amount of work needed for moving a distribution therebetween and transforming one distribution to another distribution, perceptual loss, or a mean square error (MSE).

The electronic device according to an embodiment may configure a threshold value for determining whether a face is an authenticated face.

For example, the electronic device may sectionalize an authenticated face into a plurality of areas, and may configure a threshold value based on a size (range) of an editing area among the plurality of areas.

For example, the electronic device may sectionalize the authenticated face into a plurality of areas and may configure a threshold value for each of the plurality of areas, and may compare a score obtained for an editing area among the plurality of areas and the threshold value configured for the editing area so as to determine whether the face included in the first image is an authenticated face.

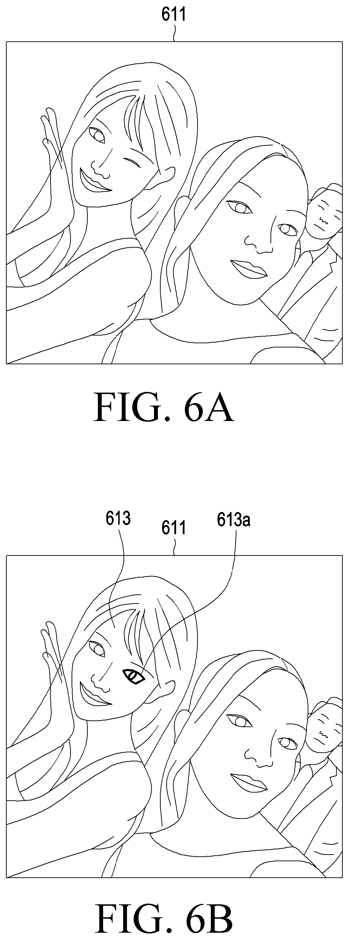

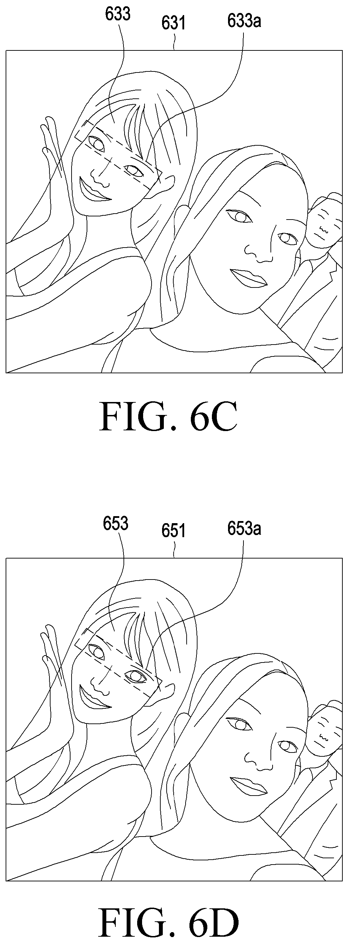

FIGS. 6A, 6B, 6C, and 6D are diagrams illustrating an operation of editing a face included in an image by using an artificial intelligence (AI) model in an electronic device according to an embodiment.

According to an embodiment, as illustrated in FIG. 6A, an electronic device (e.g., the electronic device 101 of FIG. 1 and/or the electronic device 201 of FIG. 2) may identify a first image 611 selected by a user.

According to an embodiment, as illustrated in FIG. 6B, when an eye area 613a selected by the user in a face 613 included in the first image 611 is identified as an editing area, the electronic device may identify whether the face 613 included in the first image 611 is an authenticated face that is allowed to edit using an artificial intelligence (AI) model. When the face 613 selected from the first image 611 for editing is identified as an authenticated face that is allowed to edit using the AI model, the electronic device may obtain first information associated with the face 613, may generate editing information including at least one of the first image 611, information associated with the editing area 613a of the face included in the first image, and a prompt describing editing, and first information associated with the face 613, and may transfer the same to the AI model (e.g., the AI model 231 of FIG. 2B).

According to an embodiment, as illustrated in FIG. 6C, when a second image 631 in which the eye area included in the first image is edited using the editing information is received from the AI model, the electronic device may sectionalize a face 633 included in the second image 631 into a plurality of areas, may identify that the face 633 included in the second image 631 is a face identical to the face 613 which is unedited and is included in the first image 611 or to the authenticated face when a score for an edited eye area 633a among the plurality of areas is identified as 87.562 that is greater than a threshold value of 75, and may display the second image 631 on a display of the electronic device (e.g., the display 260 of FIG. 2A).

According to an embodiment, as illustrated in FIG. 6D, when a second image 651 in which an eye area included in the first image is edited using the editing information is received from the AI model, the electronic device may sectionalize a face 653 included in the second image 651 into a plurality of areas, may identify that the face 653 included in the second image 651 is a face different from the face 613 which is unedited and is included in the first image 611 or the authenticated face when a score for an edited eye area 653a among the plurality of areas is identified as 56.674, which is less than the threshold value of 75, and may display a message indicating that face editing for the first image 611 is not possible on the display of the electronic device (e.g., the display 260 of FIG. 2A).

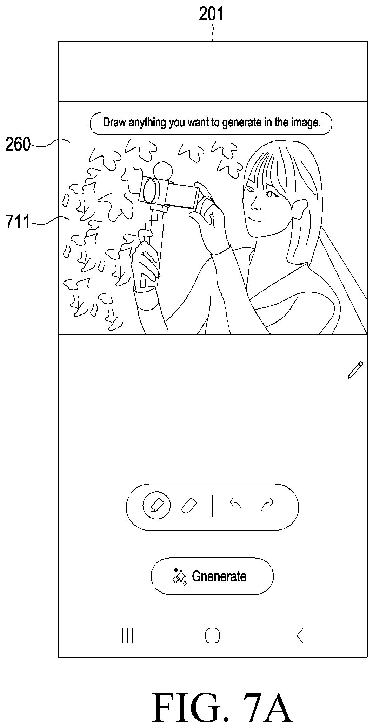

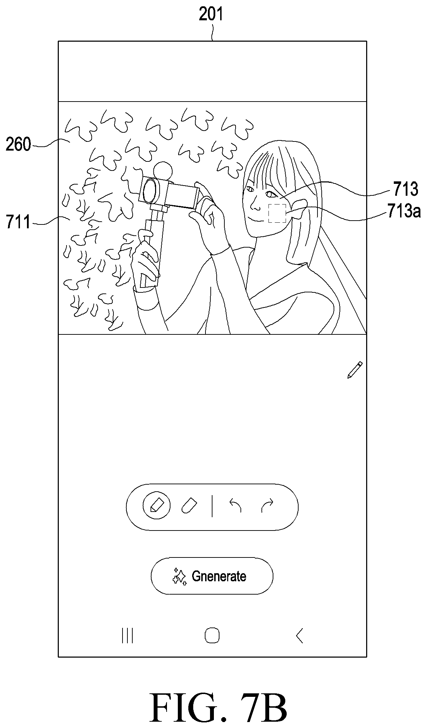

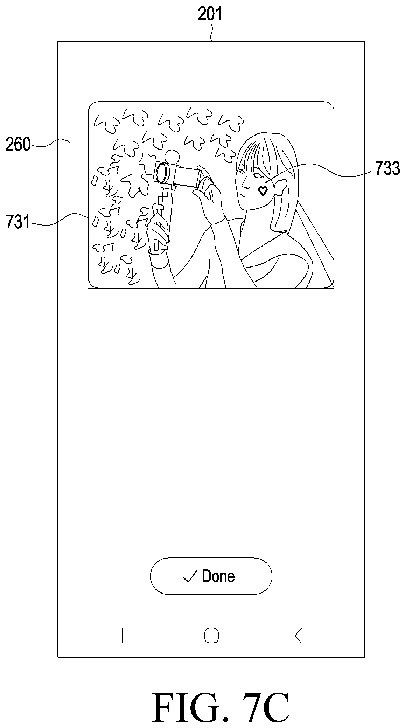

FIGS. 7A, 7B, and 7C are diagrams illustrating an operation of editing a face included in an image by using an artificial intelligence (AI) model in an electronic device according to an embodiment.

According to an embodiment, as illustrated in FIG. 7A, the electronic device 201 (e.g., the electronic device 101 of FIG. 1 and/or the electronic device 201 of FIG. 2) may display a first image 711 selected by a user on the display 260 (e.g., the display 260 of FIG. 2A) of the electronic device.

According to an embodiment, as illustrated in FIG. 7B, when a left cheek area 713a selected by the user in a face 713 included in the first image 711 is identified as an editing area, the electronic device 201 may identify whether the face 713 included in the first image 711 is an authenticated face that is allowed to edit using an AI model. When the face 713 selected from the first image 711 for editing is identified as an authenticated face that is allowed to edit using the AI model, the electronic device 201 may obtain first information associated with the face 713, may generate editing information including at least one of the first image 711, information associated with the editing area 713a of the face included in the first image, and a prompt describing editing (e.g., displaying a heart on the left cheek), and first information associated with the face 713, and may transfer the same to the AI model (e.g., the AI model 231 of FIG. 2B).

According to an embodiment, as illustrated in FIG. 7C, when a second image 731 in which the left cheek area included in the first image is edited using the editing information is received from the AI model, the electronic device 201 may sectionalize a face 733 included in the second image 731 into a plurality of areas, may obtain a score for the entire face area among the plurality of areas, may identify that the face 733 included in the second image 731 is a face identical to the face 713 which is unedited and is included in the first image 711, or identical to an authenticated face when the score is identified as being greater than or equal to a threshold value, and may display the second image 731 on the display 260.

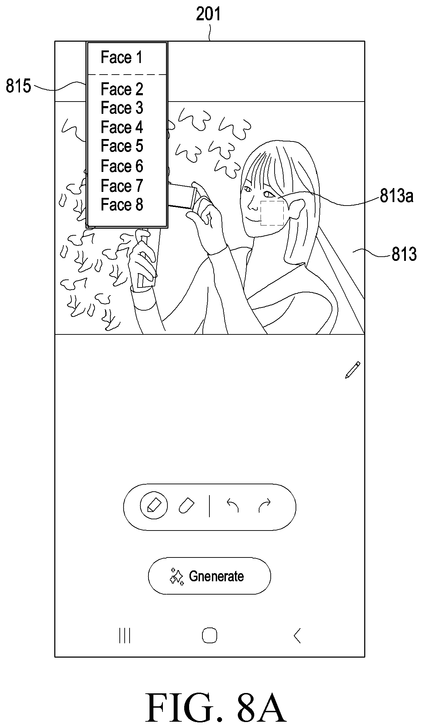

FIG. 8A is a diagram illustrating an operation of editing a face included in an image by using an artificial intelligence (AI) model in an electronic device according to an embodiment.

According to an embodiment, with reference to FIG. 8A, when it is identified that editing of a face 813a included in an image 813 is selected, the electronic device 201 (e.g., the electronic device 101 of FIG. 1 and/or the electronic device 201 of FIG. 2) may provide an option 815 that enables a user to select first information associated with the face 813a. The electronic device 201 may provide the option 815 including a plurality of pieces of first information so that a face included in an image is capable of being edited variously based on the pieces of first information associated with various faces.

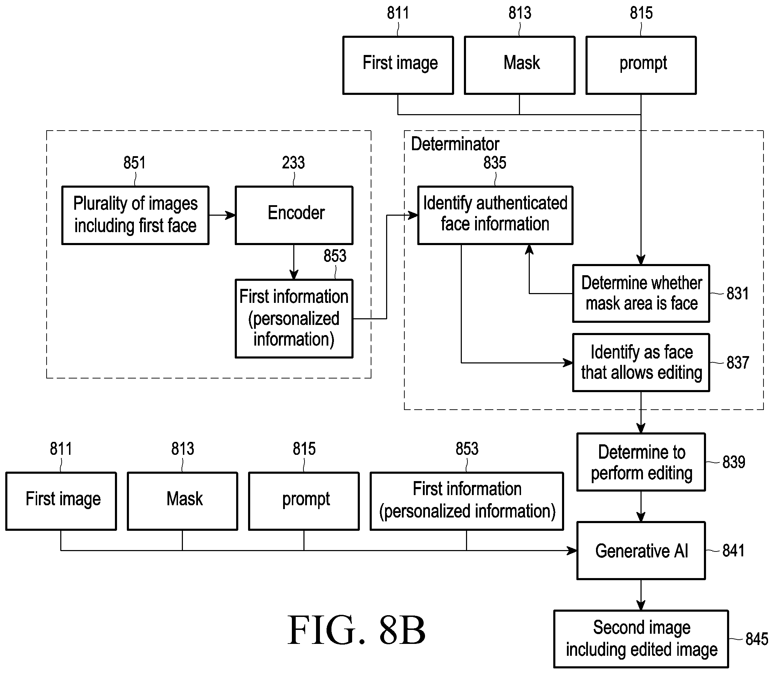

FIG. 8B is a diagram illustrating an operation of editing a face included in an image by using an artificial intelligence (AI) model in an electronic device according to an embodiment.

According to an embodiment, with reference to FIG. 8B, when it is identified that a first image 811 including a first face, a mask area 813 indicating an editing area, and a prompt 815 describing editing are input, an electronic device (e.g., the determinator 285 of FIG. 2) may determine whether the mask area is a face in operation 831.

In operation 835, when it is identified that the mask area is a face, the electronic device (e.g., the determinator 285 of FIG. 2) may identify first information 853 that is associated with the first face and is obtained by training, via an artificial intelligence (AI) trainer (e.g., 233), characteristics of the first face using a plurality of images 851 including the first face as an input value, and may identify authenticated face information based on the first information 853 associated with the first face.

Based on the first information 853 associated with the first face, the electronic device (e.g., the determinator 285 of FIG. 2) may identify the face included in the first image as an authenticated face in operation 837.

When the face included in the first image is identified as an authenticated face, the electronic device (e.g., the determinator 285 of FIG. 2) may determine to edit the first image in operation 839.

In operation 841, the AI model (e.g., the AI model 231 of FIG. 2B) may receive editing information including the first image 811 including the first face, the mask area 813 indicating an editing area, the prompt 815 describing editing, and the first information 853.

In operation 845, the AI model (e.g., the AI model 231 of FIG. 2B) may generate and output a second image in which the face included in the first image is edited based on the editing information including the first image 811 including the first face, the mask area 813 indicating an editing area, the prompt 815 describing editing, and the first information 853.

According to an embodiment, an electronic device includes: a communication circuit; a display; memory storing instructions; and at least one processor including a processing circuit operatively coupled to the memory, wherein the instructions, when executed by the at least one processor, cause the electronic device to: based on determining that a face included in a first image is being edited, transfer, to an artificial intelligence (AI) model, editing information including first information associated with the face included in the first image, the first information obtained by training a characteristic of the face selected for editing, based on determining a second image in which the face included in the first image is edited using the editing information is received from the AI model, obtain a score related to a similarity between an edited face included in the second image and the face included in the first image, and based on determining the obtained score is greater than or equal to a threshold value, store the second image.

According to an embodiment, the instructions, when executed by the at least one processor, cause the electronic device to: based on determining the face included in the first image is being edited, identify, using the AI model, whether the face included in the first image and selected for editing is an authenticated face that is allowed to be edited, based on determining the face included in the first image and selected for editing is identified as the authenticated face, obtain the first information associated with the face, and based on determining the face included in the first image and selected for editing is not identified as the authenticated face, display, on the display, a message indicating that face editing for the first image is not possible.

According to an embodiment, the authenticated face comprises at least one from among a face of a user of the electronic device, a face of a contact selected by the user of the electronic device among contacts stored in a contact list, or a face of a contact satisfying a condition designated by the user among the contacts stored in the contact list.

According to an embodiment, the instructions, when executed by the at least one processor, cause the electronic device to: train, by using an artificial intelligence (AI) trainer, a plurality of images including an identical face so as to generate first information including a characteristic of the identical face, and store the generated first information in the memory as first information associated with the identical face included in the plurality of trained images

According to an embodiment, the editing information includes at least one of the first image, information associated with an editing area of the face included in the first image, or a prompt describing editing.

According to an embodiment, the instructions, when executed by the at least one processor, cause the electronic device to: sectionalize the edited face included in the second image into a plurality of areas; obtain a score for the plurality of areas; based on determining the score is greater than or equal to the threshold value, display the second image on the display, and based on determining the score is less than the threshold value, display, on the display, a message indicating that face editing for the first image is not possible.

According to an embodiment, the instructions, when executed by the at least one processor, cause the electronic device to: sectionalize the edited face included in the second image into a plurality of areas; obtain a score for an area from the plurality of areas corresponding to an editing area included in the editing information, based on determining the score is greater than or equal to the threshold value, display the second image on the display, and based on determining the score is less than the threshold value, display, on the display, a message indicating that face editing for the first image is not possible.

According to an embodiment, the instructions, when executed by the at least one processor, cause the electronic device to: identify the similarity between the edited face included in the second image and the face included in the first image, based on determining the similarity is greater than or equal to the threshold value, display the second image on the display, and based on determining the similarity is less than the threshold value, display, on the display, a message indicating that face editing for the first image is not possible.

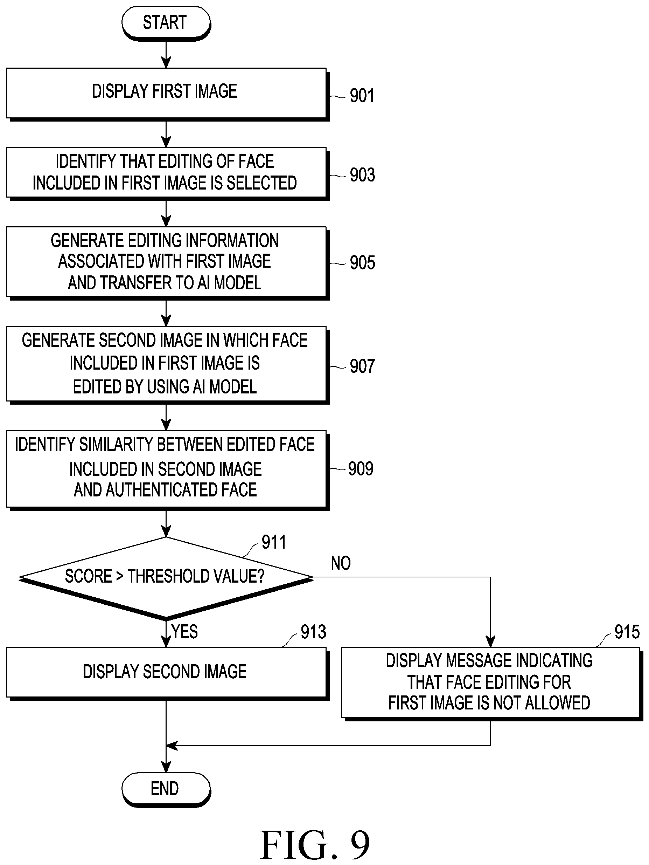

FIG. 9 is a flowchart illustrating an operation of editing a face included in an image by using an artificial intelligence (AI) model in an electronic device according to an embodiment. Operations for editing a face included in an image by using the AI model may include operations 901 to 915. In the embodiment provided hereinafter, operations may be performed sequentially, but it is not necessarily limited thereto. For example, the order of operations may be changed, and at least two operations may be performed in parallel or another operation may be additionally included.

In operation 901, an electronic device (e.g., the electronic device 101 of FIG. 1 and/or the electronic device 201 of FIGS. 2A and 2B) may display a first image.

According to an embodiment, upon identifying that the first image is selected based on an input of a user of the electronic device, the electronic device may identify whether the first image includes a face.

According to an embodiment, the electronic device may identify whether a face is included in the first image by using a face filter.

In operation 903, the electronic device (e.g., the electronic device 101 of FIG. 1 and/or the electronic device 201 of FIGS. 2A and 2B) may identify that editing of the face included in the first image is selected.

According to an embodiment, the electronic device may identify an editing area of the first image based on an input of the user of the electronic device, and may identify whether the editing area is the whole or part of the face included in the first image.

In operation 905, the electronic device (e.g., the electronic device 101 of FIG. 1 and/or the electronic device 201 of FIGS. 2A and 2B) may generate editing information associated with the first image and transfer the same to an AI model.

According to an embodiment, the electronic device according to an embodiment may obtain first information associated with the face selected from the first image for editing.

According to an embodiment, the electronic device according to an embodiment may obtain first information associated with the face selected for editing among first information obtained by training facial characteristics and may store the same in memory (e.g., the memory 230 of FIG. 2A) of the electronic device.

According to an embodiment, the electronic device may generate first information by training facial characteristics using an artificial intelligence (AI) trainer (e.g., the AI trainer 233 of FIG. 2B) and may store the same in the memory.

According to an embodiment, the electronic device may generate, using an AI training process on a plurality of images including an identical face by using the AI trainer so as to generate first information including characteristics of the identical face, and may store the first information in the memory as first information associated with the identical face included in the plurality of trained images.

According to an embodiment, the electronic device may sectionalize a face into a plurality of areas (e.g., an eye area, a nose area, a mouth area, and an entire face area) by using the AI trainer, may identify weight values corresponding to the plurality of areas, and generate first information by applying the identified weight values.

According to an embodiment, the electronic device may generate and transmit, to the AI model, editing information including at least one of the first image, information associated with the editing area of the face included in the first image, or a prompt describing editing, and the first information associated with the face selected for editing.

In operation 907, the electronic device (e.g., the electronic device 101 of FIG. 1 and/or the electronic device 201 of FIGS. 2A and 2B) may generate a second image in which the face included in the first image is edited using the AI model.

According to an embodiment, the AI model (e.g., the AI model 231 of FIG. 2B) may use, as an input value, at least one of the first image, the information associated with the editing area of the face included in the first image, and the prompt describing editing, and the first information associated with the face selected for editing, which are included in the editing information, and may generate, as an output value, the second image in which the face included in the first image is edited.

According to an embodiment, the AI model according to an embodiment may identify a weight value for the editing area based on the information associated with the editing area of the face included in the first image, and may generate the second image in which the face included in the first image is edited by applying the identified weight value.

In operation 909, the electronic device (e.g., the electronic device 101 of FIG. 1 and/or the electronic device 201 of FIGS. 2A and 2B) may identify a similarity between the edited face included in the second image and an authenticated face.

According to an embodiment, when the second image in which the face included in the first image is edited is received from the AI model (e.g., the AI model 231 of FIG. 2B), the electronic device may identify a similarity between the edited face included in the second image and the authenticated face.

According to an embodiment, the electronic device may sectionalize the face included in the second image into a plurality of areas (e.g., an eye area, a nose area, a mouth area, and an entire face area), and may obtain a score for the plurality of areas.

According to an embodiment, the electronic device may sectionalize the face included in the second image into a plurality of areas (e.g., an eye area, a nose area, a mouth area, and an entire face area), and may obtain a score for an area corresponding to an editing area among the plurality of areas.

According to an embodiment, the electronic device may obtain a score for the plurality of areas by using an earth mover distance (EMD) that is based on the minimum amount of work needed for moving a distribution therebetween and transforming one distribution to another distribution, perceptual Loss, or a mean square error (MSE).

In operation 911, the electronic device (e.g., the electronic device 101 of FIG. 1 and/or the electronic device 201 of FIGS. 2A and 2B) may compare the score for a face area included in the second image and a threshold value.

When the score is greater than or equal to the threshold value in operation 911, the electronic device may display the second image in operation 913.

According to an embodiment, the electronic device may identify that the edited face included in the second image is a face identical to the authenticated face when the score is greater than or equal to the threshold value, and may display the second image including the edited face on a display (e.g., 260 of FIG. 2A) of the electronic device.

When the score is less than the threshold value in operation 911, the electronic device may display a message indicating that editing of the first image is not possible in operation 915.

According to an embodiment, the electronic device may identify that the edited face included in the second image is a face different from the authenticated face when the score for the plurality of areas is less than the threshold value, and may display, on the display (e.g., the display 260 of FIG. 2B) of the electronic device, a message indicating that face editing for the first image is not possible.

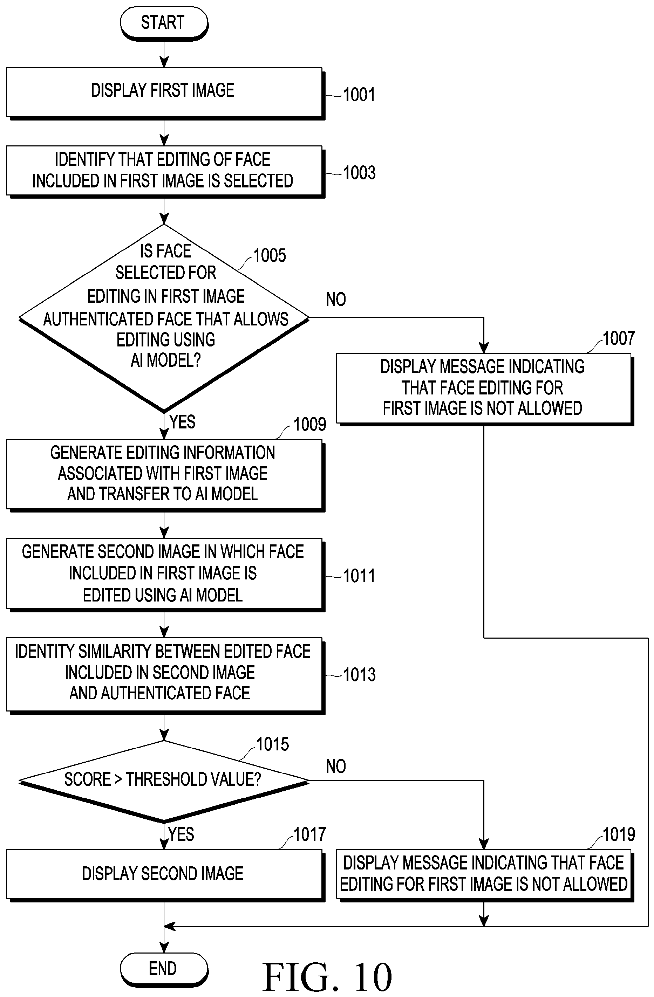

FIG. 10 is a flowchart illustrating an operation of editing a face included in an image by using an artificial intelligence (AI) model in an electronic device according to an embodiment. Operations for editing a face included in an image by using the AI model may include operations 1001 to 1019. In the embodiment provided hereinafter, operations may be performed sequentially, but it is not necessarily limited thereto. For example, the order of operations may be changed, and at least two operations may be performed in parallel or another operation may be additionally included.

In operation 1001, an electronic device (e.g., the electronic device 101 of FIG. 1 and/or the electronic device 201 of FIGS. 2A and 2B) may display a first image.

According to an embodiment, upon identifying that the first image is selected based on an input of a user of the electronic device, the electronic device may identify whether the first image includes a face.

According to an embodiment, the electronic device may identify whether a face is included in the first image by using a face filter.

In operation 1003, the electronic device (e.g., the electronic device 101 of FIG. 1 and/or the electronic device 201 of FIGS. 2A and 2B) may identify that editing of the face included in the first image is selected.

According to an embodiment, the electronic device may identify an editing area of the first image based on an input of the user of the electronic device, and may identify whether the editing area is the whole or part of the face included in the first image.

In operation 1005, the electronic device (e.g., the electronic device 101 of FIG. 1 and/or the electronic device 201 of FIGS. 2A and 2B) may identify whether the face selected from the first image for editing is an authenticated face that is allowed to edit using an AI model.

According to an embodiment, when information associated with the face selected for editing is included in authenticated face information that allows editing using an AI model and is stored in memory (the memory 230 of FIG. 2A) of the electronic device, the electronic device may identify that the face selected for editing is an authenticated face that is allowed to edit using the AI model.

When the face selected from the first image for editing is not identified as an authenticated face that is allowed to edit using an AI model in operation 1005, the electronic device may display a message indicating that face editing for the first image is not possible in operation 1007.

According to an embodiment, the electronic device may display a message indicating that face editing for the first image is not possible on a display (e.g., the display of FIG. 2B) of the electronic device.

When the face selected from the first image for editing is identified as an authenticated face that is allowed to edit using an AI model in operation 1005, the electronic device may generate and transfer editing information associated with the first image to the AI model in operation 1009.

According to an embodiment, the electronic device may obtain first information associated with the face selected from the first image for editing.

According to an embodiment, the electronic device may obtain first information associated with the face selected for editing among first information obtained by training facial characteristics and may store the same in memory (e.g., the memory 230 of FIG. 2A).

According to an embodiment, the electronic device may generate first information by using an artificial intelligence (AI) trainer (e.g., the AI trainer 233 of FIG. 2B) on facial characteristics and may store the same in the memory.

According to an embodiment, the electronic device may train a plurality of images including an identical face by using the AI trainer so as to generate first information including characteristics of the identical face, and may store the first information in the memory as first information associated with the identical face included in the plurality of trained images.

According to an embodiment, the electronic device may sectionalize a face into a plurality of areas (e.g., an eye area, a nose area, a mouth area, and an entire face area) by using the AI trainer, may identify weight values corresponding to the plurality of areas, and generate first information by applying the identified weight values.

According to an embodiment, the electronic device may generate and transmit, to the AI model, editing information including at least one of the first image, information associated with the editing area of the face included in the first image, or a prompt describing editing, and the first information associated with the face selected for editing.

In operation 1011, the electronic device (e.g., the electronic device 101 of FIG. 1 and/or the electronic device 201 of FIGS. 2A and 2B) may generate a second image in which the face included in the first image is edited using the AI model.

According to an embodiment, the AI model (e.g., the AI model 231 of FIG. 2B) may use, as an input value, at least one of the first image, the information associated with the editing area of the face included in the first image, and the prompt describing editing, and the first information associated with the face selected for editing, which are included in the editing information, and may generate, as an output value, the second image in which the face included in the first image is edited.

According to an embodiment, the AI model may identify a weight value for the editing area based on the information associated with the editing area of the face included in the first image, and may generate the second image in which the face included in the first image is edited by applying the identified weight value.

In operation 1013, the electronic device (e.g., the electronic device 101 of FIG. 1 and/or the electronic device 201 of FIGS. 2A and 2B) may identify a similarity between the edited face included in the second image and an authenticated face.

According to an embodiment, when the second image in which the face included in the first image is edited is received from the AI model (e.g., the AI model 231 of FIG. 2B), the electronic device may identify a similarity between the edited face included in the second image and the authenticated face.

According to an embodiment, the electronic device may sectionalize the face included in the second image into a plurality of areas (e.g., an eye area, a nose area, a mouth area, and an entire face area), and may obtain a score for the plurality of areas.

According to an embodiment, the electronic device may sectionalize the face included in the second image into a plurality of areas (e.g., an eye area, a nose area, a mouth area, and an entire face area), and may obtain a score for an area corresponding to the editing area among the plurality of areas.

According to an embodiment, the electronic device may obtain a score for the plurality of areas by using an earth mover distance (EMD) that is based on the minimum amount of work needed for moving a distribution therebetween and transforming one distribution to another distribution, perceptual Loss, or a mean square error (MSE).

In operation 1015, the electronic device (e.g., the electronic device 101 of FIG. 1 and/or the electronic device 201 of FIGS. 2A and 2B) may compare the score for a face area included in the second image and a threshold value.

When the score is greater than or equal to the threshold value in operation 1015, the electronic device may display the second image in operation 1017.

According to an embodiment, the electronic device may identify that the edited face included in the second image is a face identical to the authenticated face when the score is greater than or equal to the threshold value, and may display the second image including the edited face on the display (e.g., 260 of FIG. 2A) of the electronic device.

When the score is less than the threshold value in operation 1015, the electronic device may display a message indicating that editing of the first image is not possible in operation 1019.

According to an embodiment, the electronic device may identify that the edited face included in the second image is a face different from the authenticated face when the score for the plurality of areas is less than or equal to the threshold value, and may display, on the display (e.g., the display 260 of FIG. 2B) of the electronic device, a message indicating that face editing for the first image is not possible.

According to an embodiment, a method of editing a face included in an image by using an artificial intelligence (AI) model in an electronic device, includes: based on determining a face included in a first image is being edited, transferring, to an AI model, editing information including first information associated with the face included in the first image, the first information obtained by training a characteristic of the face selected for editing; based on determining a second image in which the face included in the first image is edited by using the editing information is received from the AI model, obtaining a score related to a similarity between with the edited face included in the second image and the face included in the first image; and based on determining the obtained score is greater than or equal to a threshold value, storing the second image.

According to an embodiment, the method further includes based on determining the face included in the first image is being edited, identifying, using the AI model, whether the face included in the first image and selected for editing is an authenticated face that is allowed to be edited; based on determining the face included in the first image and selected for editing is identified as the authenticated face, obtaining first information associated with the face; and based on determining the face included in the first image and selected for editing is not identified as the authenticated face, displaying, on a display, a message indicating that face editing for the first image is not possible.

According to an embodiment, the authenticated face comprises at least one of a face of a user of the electronic device, a face of a contact selected by the user of the electronic device among contacts stored in a contact list, or a face of a contact satisfying a condition designated by the user among the contacts stored in the contact list.

According to an embodiment, the method further includes: by using an artificial intelligence (AI) trianer, training a plurality of images including an identical face so as to generate first information including a characteristic of the identical face, and storing the generated first information in memory of the electronic device as first information associated with the identical face included in the plurality of trained images.

According to an embodiment, in which the editing information includes at least one of the first image, information associated with an editing area of the face included in the first image, or a prompt describing editing.

According to an embodiment, the method further includes: sectionalizing the edited face included in the second image into a plurality of areas; obtaining a score for the plurality of areas; based on determining the score is greater than or equal to the threshold value, displaying the second image on a display; and based on determining the score is less than the threshold value, displaying, on the display, a message indicating that face editing for the first image is not possible.

According to an embodiment, the method further includes sectionalizing the edited face included in the second image into a plurality of areas; obtaining a score for an area corresponding to an editing area included in the editing information among the plurality of areas; based on determining the score is greater than or equal to the threshold value, displaying the second image on a display; and based on determining the score is less than the threshold value, displaying, on the display, a message indicating that face editing for the first image is not possible.

According to an embodiment, the method further includes identifying the similarity between the edited face included in the second image and the face included in the first image; based on determining the similarity is greater than or equal to the threshold value, displaying the second image on a display; and based on determining the similarity is less than the threshold value, displaying, on the display, a message indicating that face editing for the first image is not possible.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1, 201 of FIGS. 2A and 2B) comprising:
a communication circuit (190 of FIG. 1, 290 of FIGS. 2A and 2B);
a display (160 of FIG. 1, 260 of FIGS. 2A and 2B);
at least one processor (120 of FIG. 1, 220 of FIGS. 2A and 2B) including a processing circuit; and
memory (130 of FIG. 1, 230 of FIGS. 2A and 2B) storing instructions,
wherein the instructions, when executed by the at least one processor individually or collectively, cause the electronic device to:
based on editing of a face included in a first image being identified, transfer, to an artificial intelligence (AI) model (e.g., 231 of FIG. 2B), editing information including first information associated with the face included in the first image, the first information obtained by training a characteristic of the face selected for editing,
based on receiving from the AI model a second image in which the face included in the first image is edited using the editing information, obtain a score related to a similarity between an edited face included in the second image and the face included in the first image, and
based on the obtained score being greater than or equal to a threshold value, store the second image.

2. The electronic device of claim 1, wherein the instructions, when executed by the at least one processor individually or collectively, cause the electronic device to:
based on editing of the face included in the first image is being identified, identify, using the AI model, whether the face included in the first image and selected for editing is an authenticated face that is allowed to be edited,
based on the face included in the first image and selected for editing being identified as the authenticated face, obtain the first information associated with the face, and
based on the face included in the first image and selected for editing not being identified as the authenticated face, display, on the display, a message indicating that face editing for the first image is not possible.

3. The electronic device of claim 1 or claim 2, wherein the authenticated face comprises at least one from among a face of a user of the electronic device, a face of a contact selected by the user of the electronic device among contacts stored in a contact list, or a face of a contact satisfying a condition designated by the user among the contacts stored in the contact list.

4. The electronic device of any one of claims 1 to 3, wherein the instructions, when executed by the at least one processor individually or collectively, cause the electronic device to:
train, by using an artificial intelligence (AI) trainer, a plurality of images including an identical face so as to generate first information including a characteristic of the identical face; and
store the generated first information in the memory as first information associated with the identical face included in the plurality of trained images.

5. The electronic device of any one of claims 1 to 4, wherein the editing information comprises at least one of the first image, information associated with an editing area of the face included in the first image, or a prompt describing editing.

6. The electronic device of any one of claims 1 to 5, wherein the instructions, when executed by the at least one processor individually or collectively, cause the electronic device to:
sectionalize the edited face included in the second image into a plurality of areas;
obtain a score for the plurality of areas;
based the score being greater than or equal to the threshold value, display the second image on the display, and
based on the score being less than the threshold value, display, on the display, a message indicating that face editing for the first image is not possible.

7. The electronic device of any one of claims 1 to 6, wherein the instructions, when executed by the at least one processor individually or collectively, cause the electronic device to:
sectionalize the edited face included in the second image into a plurality of areas;
obtain a score for an area from the plurality of areas corresponding to an editing area included in the editing information,
based on the score being greater than or equal to the threshold value, display the second image on the display, and
based on the score being less than the threshold value, display, on the display, a message indicating that face editing for the first image is not possible.

8. The electronic device of any one of claims 1 to 7, wherein the instructions, when executed by the at least one processor individually or collectively, cause the electronic device to:
identify the similarity between the edited face included in the second image and the face included in the first image,
based on the similarity being greater than or equal to the threshold value, display the second image on the display, and
based on the similarity being less than the threshold value, display, on the display, a message indicating that face editing for the first image is not possible.

9. A method of editing a face included in an image by using an artificial intelligence (AI) model in an electronic device (101 of FIG. 1, 201 of FIGS. 2A and 2B), the method comprising:
based on editing of a face included in a first image is being identified, transferring, to an AI model (231 of FIG. 2B), editing information including first information associated with the face included in the first image, the first information obtained by training a characteristic of the face selected for editing;
based on a second image in which the face included in the first image is edited by using the editing information being received from the AI model, obtaining a score related to a similarity between with the edited face included in the second image and the face included in the first image; and
based on the obtained score being greater than or equal to a threshold value, storing the second image.

10. The method of claim 9, further comprising:
based on editing of the face included in the first image is being identified, identifying, using the AI model, whether the face included in the first image and selected for editing is an authenticated face that is allowed to be edited;
based on the face included in the first image and selected for editing being identified as the authenticated face, obtaining the first information associated with the face; and
based on the face included in the first image and selected for editing not being identified as the authenticated face, displaying, on a display, a message indicating that face editing for the first image is not possible.

11. The method of claim 9 or claim 10, wherein the authenticated face comprises at least one of a face of a user of the electronic device, a face of a contact selected by the user of the electronic device among contacts stored in a contact list, or a face of a contact satisfying a condition designated by the user among the contacts stored in the contact list.

12. The method of any one of claims 9 to 11, further comprising:
by using an artificial intelligence (AI) trianer, training a plurality of images including an identical face so as to generate first information including a characteristic of the identical face; and
storing the generated first information in memory of the electronic device as first information associated with the identical face included in the plurality of trained images.

13. The method of any one of claims 9 to 12, wherein the editing information comprises at least one of the first image, information associated with an editing area of the face included in the first image, or a prompt describing editing.

14. The method of any one of claims 9 to 13, further comprising:
sectionalizing the edited face included in the second image into a plurality of areas;
obtaining a score for the plurality of areas;
based on the score being greater than or equal to the threshold value, displaying the second image on a display; and
based on the score being less than the threshold value, displaying, on the display, a message indicating that face editing for the first image is not possible.

15. A non-transitory storage medium, storing instructions which, when executed by at least one processor of an electronic device, cause the electronic device to perform a method comprising:
based on editing of a face included in a first image is being identified, transferring, to an artificial intelligence (AI) model, editing information including first information associated with the face included in the first image, the first information obtained by training a characteristic of the face selected for editing;
based on receiving from the AI model a second image in which the face included in the first image is edited by using the editing information, obtaining a score related to a similarity between the edited face included in the second image and the face included in the first image; and
based on the obtained score being greater than or equal to a threshold value, storing the second image.
